# EUROPEAN PATENT APPLICATION

(11) **EP 3 281 778 A1**
(43) Date of publication of application: **14.02.2018**
(21) Application number: 16776816.7
(22) Date of filing: 05.04.2016
(51) Int. Cl.: B29D 30/04, B29D 30/06, B60C 11/16

(54) **TIRE STRUCTURE HAVING SPIKES COUPLED THEREON**

(30) Priority: 06.04.2015 KR 20150048194
(71) Applicant: Park, Gye Jeoung, Daegu 42004 (KR)
(72) Inventor: Park, Gye Jeoung, Daegu 42004 (KR)
(74) Representative: Perani & Partners S.p.A.
(86) International application number: PCT/KR2016/003507
(87) International publication number: WO 2016/163713

(57) **Abstract**

The present invention relates to a tire structure which is used for a power generation system using tire deformation and is formed by coupling, to an inside of a tire, spikes operated in conjunction with deformation of a tire. More particularly, the present invention relates to a tire structure having spikes coupled thereon, the tire structure including: a tire; an attachment layer positioned between an inner surface of the tire and a spike supporting layer, and allowing the spike supporting layer to be coupled to the inside of the tire; and a spike supporting layer coupled to the inside of the tire by the attachment layer and supporting the spikes operated in conjunction with deformation of the tire, thereby enabling an existing tire to be used for the power generation system using tire deformation.

## Description

### Technical Field

The present invention relates to a tire structure which is used for a power generation system using tire deformation and is formed by coupling spikes operated in conjunction with deformation of a tire to an inside of a tire. More particularly, the present invention relates to a tire structure having spikes coupled thereon, the tire structure including: a tire; an attachment layer positioned between an inner surface of the tire and a spike supporting layer, and allowing the spike supporting layer to be coupled to the inside of the tire; and a spike supporting layer coupled to the inside of the tire by the attachment layer and supporting the spikes operated in conjunction with deformation of the tire, thereby enabling an existing tire to be used for the power generation system using tire deformation.

### Background Art

Unlike an internal combustion engine that generates power by consuming fuel such as gasoline, diesel, LP gas or the like, an electric vehicle (including a hybrid vehicle) operates by receiving electric energy from a battery (storage battery) charged with electric energy whereby the vehicle can be driven. Such an electric vehicle does not cause pollution such as harmful gas, noise, and dust generated in an internal combustion engine and is environmentally friendly, so studies thereon have been actively conducted in recent years.

The electric vehicle (including a hybrid vehicle) has a storage battery charged with electric energy, and operates using electric energy charged in the storage battery. Further, when the electric energy charged in the storage battery is exhausted, the storage battery must be recharged to drive the vehicle. In the case of an internal combustion engine vehicle powered by gasoline, diesel, or LP gas, gas stations for refueling are widely available. Accordingly, the internal combustion engine vehicle can easily be refueled whenever fuel is consumed. However, charging stations for charging electrical energy are not widely available at present. Consequently, the electric vehicle is can't be easily recharged when the electric energy of the storage battery is exhausted during driving.

Meanwhile, a large amount of electric energy is required to drive the electric vehicle. However, the electric vehicle cannot store a large amount of electric energy because the storage battery has limited weight and volume. A conventional electric vehicle as shown in the following (patent document) drives only using electric energy charged in a storage battery, and is provided with no separate system for generating power using energy generated during driving and for charging the storage battery thereby. In addition, the amount of electric energy charged in the storage battery is predetermined to a certain amount. Thus, long distance operation of the electric vehicle is difficult to achieve.

### (Patent Document)

Korean Patent Application Publication No. 10-2013-0054083 (published on 24 May, 2013) "Electric vehicle using separable electric battery"

Moreover, the internal combustion engine vehicle does not require a long time to refuel, so that immediate refueling is possible. However, in the case of a storage battery, when the amount of electric energy to be charged in the storage battery is large, it takes a long time to charge the storage battery. Consequently, the storage battery has commercialization problem because it requires a lot of time to be charged whenever the vehicle is driven.

In an effort to fundamentally improve the problems associated with battery charging and driving of an electric vehicle (including a hybrid vehicle) or of an internal combustion engine vehicle, the present invention, which is related to a power generation system using tire deformation occurring during a vehicle driving, and a new tire structure applied thereto, has been derived.

### Disclosure

### Technical Problem

Accordingly, the present invention has been made keeping in mind the above problems occurring in the prior art.

An object of the present invention is to provide a tire structure having spikes coupled thereon, in which spikes operated in conjunction with deformation of a tire are coupled to a conventional tire, whereby the conventional tire is used for a power generation system using tire deformation.

Another object of the present invention is to provide a tire structure having spikes coupled thereon, in which an attachment layer is formed by curing a rubber composition so that the spikes are firmly coupled to the inside of the tire, and the attachment layer performs as a buffer due to its elasticity, thereby preventing the tire from being damaged by the spikes.

### Technical Solution

A tire structure having spikes coupled thereon in order to accomplish the above object has the following configuration.

According to an exemplary embodiment of the present invention, the tire structure is used for a power generation system using tire deformation, and is formed by coupling spikes operated in conjunction with deformation of a tire to an inside of the tire.

According to an exemplary embodiment of the present invention, the tire structure includes: a tire; an attachment layer provided between an inner surface of the tire and a spike supporting layer, and allowing the spike supporting layer to be coupled to the inside of the tire; and the spike supporting layer coupled to the inside of the tire by the attachment layer, and supporting the spikes operated in conjunction with deformation of the tire.

According to an exemplary embodiment of the present invention, the tire structure may further include: a spike protection layer protecting the spikes inside the tire.

According to an exemplary embodiment of the present invention, the attachment layer may be formed by placing a rubber composition between the inner surface of the tire and the spike supporting layer and by changing physical properties of the rubber composition through a curing process.

According to an exemplary embodiment of the present invention, for firmly coupling the spikes to the spike supporting layer, the spike supporting layer may include any one of the group consisting of a steel cord sheet having steel wires arranged at predetermined intervals, a nylon cord sheet, an aramid cord sheet, a polyamide cord sheet, a hybrid cord sheet, a special cord sheet.

According to an exemplary embodiment of the present invention, each of the spikes may include: a flange extending at an end of the spike and having a predetermined area; and a protrusion protruding from the flange, wherein the protrusion of the spike is coupled to the spike supporting layer by passing through the spike supporting layer.

According to an exemplary embodiment of the present invention, the spike protection layer may be formed to surround a coupling portion of the spike exposed to connect to the power generation system using tire deformation, so the protection layer protects the spike and covers the spike supporting layer to which the spike is coupled.

According to an exemplary embodiment of the present invention, the spike supporting layer may be a steel cord sheet layer formed by overlapping a first steel cord sheet in which the steel wires are arranged at regular intervals in a first direction with a second steel cord sheet in which the steel wires are arranged at regular intervals in a second direction, so that the steel wires of the first and second sheets are overlapped with each other in a lattice form.

According to an exemplary embodiment of the present invention, the spike may further include: a cover portion coupled to an end of the protrusion passing through the spike supporting layer and allowing the spike to be firmly coupled to the spike supporting layer.

According to an exemplary embodiment of the present invention, the spikes may be coupled to the spike supporting layer such that the spikes are staggered with each other with respect to a bilateral symmetry axis of the tire.

According to an exemplary embodiment of the present invention, the tire structure may further include: a rubber-metal adhesive layer positioned between the attachment layer and the spikes, and made of a rubber-metal adhesive.

### Advantageous Effects

The present invention can achieve the following effects according to the above-described embodiments, and the configuration, the coupling relationship, and the use relationship that will be described below.

The present invention has an effect that the spikes operated in conjunction with deformation of the tire are coupled to the conventional tire, so it is possible to use the conventional tire for the power generation system using tire deformation.

Further, the present invention has an effect that the attachment layer is formed by curing the rubber composition so that the spikes can be firmly coupled to the inside of the tire, and the attachment layer performs as a buffer due to its elasticity, thereby preventing the tire from being damaged by the spikes.

### Description of Drawings

FIG. 1 is a horizontal cross-sectional view showing a power generation system using a tire deformation, the system to which the present invention is applied.
FIG. 2 is a vertical sectional view showing the power generation system of FIG. 1.
FIG. 3 is a cross-sectional view showing a tire structure having spikes coupled thereon according to an embodiment of the present invention.
FIG. 4 is a detailed view showing a coupling relationship between a spike and a spike supporting layer of FIG. 3.
FIG. 5 is a reference view showing an example of the spike supporting layer.
FIG. 6 is a reference view showing another example of the spike supporting layer.
FIG. 7 is a reference view showing an example of a steel cord sheet layer in which two layers of steel cord sheets are overlapped with each other.
FIG. 8 is a reference view showing another example of the steel cord sheet layer in which four layers of steel cord sheets are overlapped with each other.
FIG. 9 is a reference view showing a further example of the steel cord sheet layer in which six layers of steel cord sheets are overlapped with each other.
FIG. 10 is a block diagram showing a method of manufacturing a tire structure having spikes coupled thereon according to an embodiment of the present invention.
FIGS. 11 to 15 are reference views showing the method of manufacturing the tire structure having spikes coupled thereon according to the embodiment of the present invention.
FIG. 16 is a detailed view showing a coupling relationship between the spike and the spike supporting layer of FIG. 3.

### <Description of the Reference Numerals in the Drawings>

10: driving part
20: power generating part
30: tire
31: bilateral symmetry axis
110: spikes
111: coupling portion
112: flange
113: protrusion
114: cover portion
120: load transfer part
130: rotation part
210: permanent magnet
220: coil
310: attachment layer
320: spike supporting layer
321: protrusion insertion hole
322: steel wires
323: steel cord sheet layer
330: spike protection layer
331: spike insertion hole
332: cord layer
333: special rubber layer
110a∼d: first to fourth spikes
310a: rubber composition layer
320a: spike supporting layer
323-1: first steel cord sheet
323-2: second steel cord sheet
323-3: third steel cord sheet
323-4: fourth steel cord sheet
323-5: fifth steel cord sheet
323-6: sixth steel cord sheet
A: pressure member
B: support jig C: flat member

### Best Mode

Exemplary embodiments of the present invention will be described more fully hereinafter with reference to the accompanying drawings. In the following description of the present invention, detailed descriptions of known functions and components incorporated herein will be omitted when it may make the subject matter of the present invention unclear. Unless the context clearly indicates otherwise, it will be further understood that the terms "comprises", "comprising", "includes" and/or "including", when used herein, specify the presence of stated features, integers, steps, operations, elements, and/or components, but do not preclude the presence or addition of one or more other features, integers, steps, operations, elements, components, and/or groups thereof.

The spirit of the invention to be proposed in the present invention is a tire structure and a method of manufacturing the same for applying a power generation system using tire deformation, which is applicable to all of the embodiments in which all kinds of vehicles having rotatable wheels and the rotatable wheels can be curved and expanded by gravity, for example, to a transportation device including a tire driven by electric energy of a battery as a power source, such as a hybrid vehicle having an internal combustion engine, an electric vehicle, an electric motorcycle, etc., wherein power is generated by using deformation of a tire that repeats compression and expansion due to gravity during a vehicle driving (ultimately particularly using tire expansion of the tire deformation occurring due to gravity during the vehicle driving), or power is generated, that is, various types of power is generated or electric energy is produced, which is used to charge a battery or used directly as a power source of a motor. In other words, the present invention provides a tire structure having spikes coupled thereon and a method of manufacturing the same, wherein the tire structure is formed by coupling spikes operated in conjunction with deformation (compression and expansion) of the tire to the inside of a conventional tire, and is used for the power generation system using tire deformation.

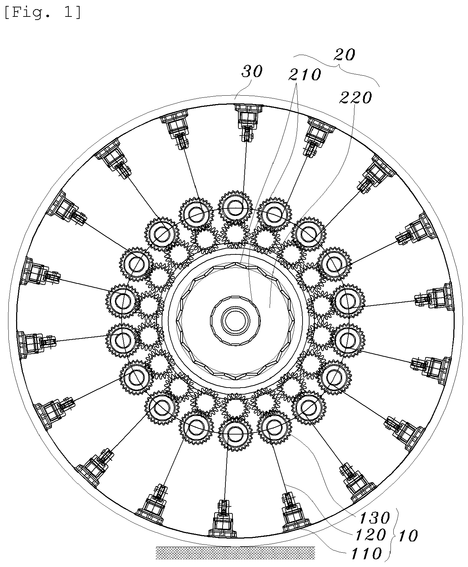

Referring to FIGS. 1 to 9, a tire structure having spikes coupled thereon according to an embodiment of the present invention is used for a power generation system using tire deformation, and includes: a tire 30; an attachment layer 310 positioned between an inner surface of the tire 30 and a spike supporting layer 320 and allowing the spike supporting layer 320 to be coupled to the inside of the tire 30; the spike supporting layer 320 coupled to the inside of the tire 30 by the attachment layer 310, and supporting spikes 110 operated in conjunction with deformation of the tire 30. The tire structure may further include a spike protection layer 330 that protects the spikes 110 inside the tires 30 as needed.

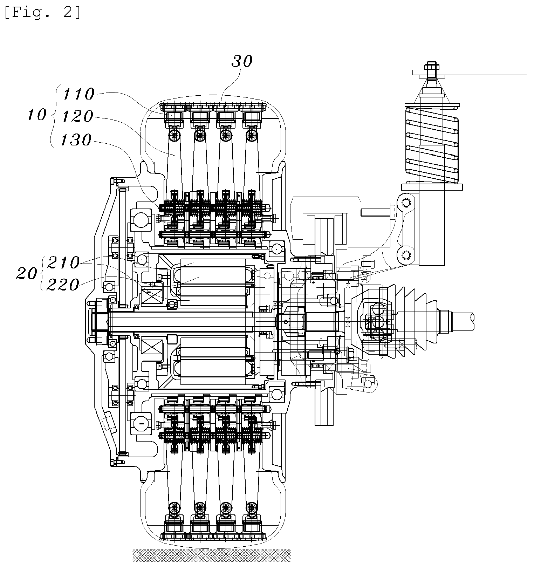

The power generation system to which the present invention is applied is used to generate various types of power such as power generation, air compression, hydraulic compression, power compression using a spiral spring, and various other power generation methods. Hereinafter, an example of the power generation system will be described with reference to FIGS. 1 and 2. The power system includes: a driving unit 10 converting a deformation of the tire 30 into a driving force; and a power generating unit 20 generating power using the driving force converted by the driving unit 10. The power generating part 20 is configured to generate power using the driving force transmitted from the driving part10. For example, the power generating part generates power through the action (that is, using the principle that either the permanent magnet 210 or the coil 220 rotates to generate an induced electromotive force) between a permanent magnet 210 and a coil 220 by using a rotational force transmitted from a rotating unit 130 that will be described later. Further, the driving part 10 is configured to convert the deformation of the tire 30, which occurs during driving of a vehicle (which is a concept that involves a vehicle driving with tires 30 mounted thereon, such as a bicycle, a car, a truck, etc.), into a driving force. The tire 30 of the vehicle is repeatedly deformed while driving. In other words, the surface of the tire 30, which is in contact with the ground during the vehicle driving, is compressed by the weight of the vehicle itself. Then, as the surface of the tire 30 is off the ground due to rotation of the tire 30 according to the continuous driving, the compressed portion thereof is expanded again by air pressure inside the tire 30 or the like and is restored to its original state. In this manner, the tire 30 repeats compression and expansion during driving. In the power generation system, the deformation of the tire 30, which repeatedly compresses and expands during the vehicle driving, is converted into the driving force using the driving part 10, and the power generating part 20 generates power by using the thus converted driving force so that the power can be used for charging the battery of the internal combustion engine vehicle, particularly the battery (storage battery) of the electric vehicle (including the hybrid vehicle) or can be utilized directly as a driving force of the motor of the electric vehicle. In particular, the driving part 10 can convert the deformation of the tire 30 due to the compression and expansion of the tire 30 into a reciprocating motion to convert the reciprocating motion into the driving force. For this purpose, as shown in FIG. 1, the driving part 10 may include a spike 110 coupled to the tire 30 and operated in conjunction with deformation of the tire 30; a load transfer part 120 transmitting a motion of the spike 110 to the rotation part 130; and the rotation unit 130 rotating in conjunction with the motion of the spike 110 that is transmitted from the load transfer part 120, and transmitting a driving force to the power generating part 20.

The present invention relates to the tire structure having spikes coupled thereon used in the power generation system using the above-described tire deformation. As described above, the tire structure having spikes coupled thereon according to an embodiment of the present invention may include the tire 30, the attachment layer 310, the spike supporting layer 320, or the spike protection layer 330.

The tire 30 may use an existing tire, and the present invention is characterized in that the spikes 110 can be coupled to the existing tire 30, so it is possible to utilize the existing tire without manufacturing a new tire having spikes integrally coupled thereon for use in the power generation system using tire deformation. However, the tire structure may be formed by manufacturing a new tire having the attachment layer 310, the spike supporting layer 320, or the spike protection layer 330 without using the existing tire 30.

The attachment layer 310 is positioned between the inner surface of the tire 30 and the spike supporting layer 320 to allow the spike supporting layer 320 to be coupled to the inside of the tire 30. The attachment layer 310 may be formed of at least one layer and may use various methods to couple the spike supporting layer 320 to the inside of the tire 30. For example, an adhesive (rubber) composition including raw rubber and sulfur is positioned between the inner surface of the tire 30 and the spike supporting layer 320 and then the physical properties of the rubber composition are changed through a curing process, thereby forming the attachment layer 310 (the adhesive composition may use various types of adhesive materials other than raw rubber). When the attachment layer 310 is formed as described above, it is possible to firmly couple the spike supporting layer 320 to the inside of the tire 30, to prevent the tire 30 from being damaged by the spikes 110 by performing as a buffer due to its elasticity, and to utilize the rubber composition used in the manufacturing of the tire and the apparatus used in the curing process, thereby achieving economic efficiency. As an example of a process of forming the attachment layer 310, the process may include the step of grinding and roughening the inner surface of the tire 30. Here, there may be added a process of applying an adhesive rubber such as mucilage, etc. to the ground roughened surface of the inner surface of the tire 30 and drying the adhesive rubber.

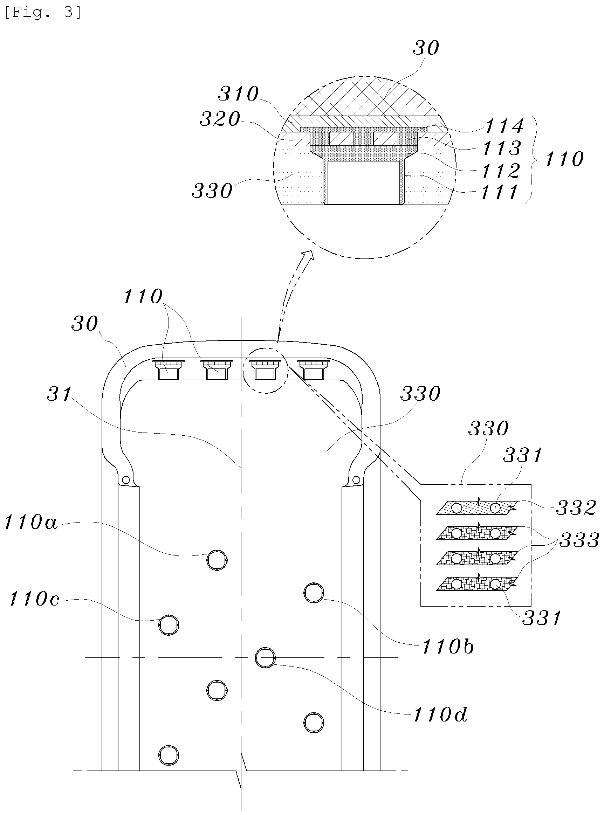

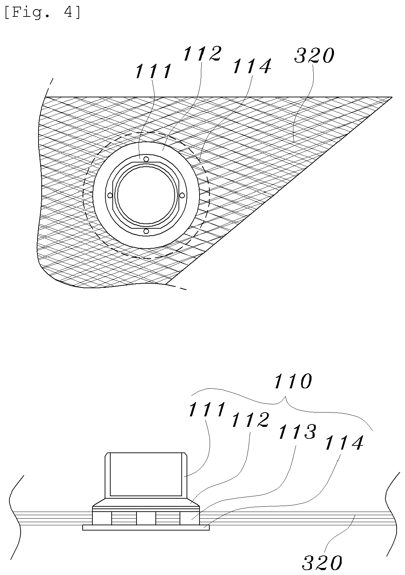

The spike supporting layer 320 is coupled the inside of the tire 30 by the attachment layer 310, and supporting the spikes 110 operated in conjunction with deformation of the tire 30, that is, to allow the spikes 110 used for the power generation system using the deformation of the tire 30 to be coupled to the tire 30. As shown in FIG. 3, the spikes 110 are coupled to the spike supporting layer 320 such that the spikes are staggered with each other with respect to a bilateral symmetry axis 31 of the tire 30. One spike operated in conjunction with deformation of the tire 30 and the other spike operated in conjunction with deformation of the tire 30 immediately after the first spike are positioned in opposite directions with respect to the bilateral symmetry axis 31. Described with reference to FIG. 3, assuming that a first spike 110a positioned at the left side of the bilateral symmetry axis 31 operates first in conjunction with the deformation of the tire 30, a second spike 110b operated in conjunction with the tire 30 after the first spike 110a is positioned at the right side of the bilateral symmetry axis 31, a third spike 110c operated in conjunction with the tire 30 after the second spike 110b is positioned at the left side of the bilateral symmetry axis 31, and a fourth spike 110d operated in conjunction with the tire 30 after the third spike 110c is positioned at the right side of the bilateral symmetry axis 31. The arrangement of the spikes 110 as described above provides smooth power and torque, ensures distribution of power and torque, ensures continuous delivery of power and torque, and provides improved power efficiency, an improved cogging phenomenon, and reduced noise and vibration. There are several examples of the coupling relationship between the spikes 110 and the spike supporting layer 320. For example, as shown in FIGS. 3 and 4, each of the spikes may include a coupling portion 111 coupled to the load transfer part 120, a flange 112 extending at an end of the coupling portion 111 and having a predetermined area, a protrusion 113 protruding from the flange 112, and a cover portion 114 coupled to an end of the protrusion 113 passing through the spike supporting layer 320, and allowing the spike 110 to be firmly coupled to the spike supporting layer 320, wherein the protrusion 113 of the spike 110 is embedded in the spike supporting layer 320 so that the spike 110 is coupled to the spike supporting layer 320.

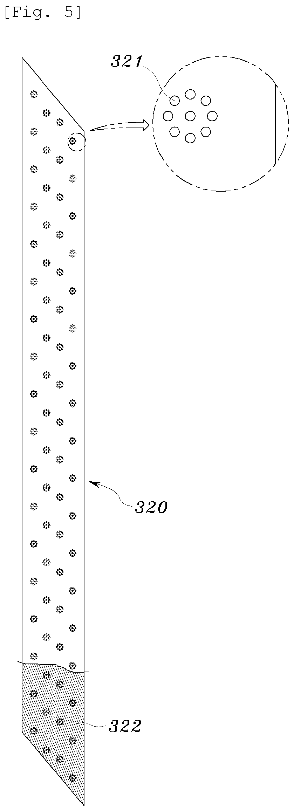

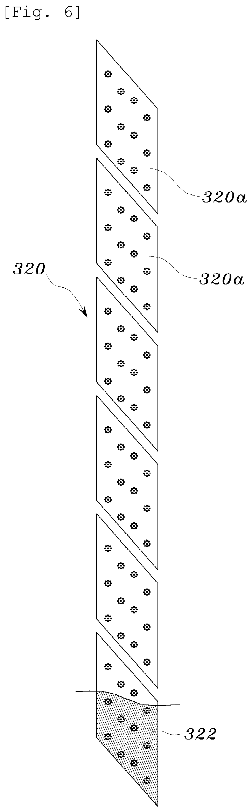

In other words, in the state in which the spike 110 has a structure including the flange 112 extending from an outer diameter of the coupling portion 111 and having a predetermined area, the protrusion 113 protruding from the flange 112 and having a sharp end, and the cover portion 114 coupled to the end of the protrusion 113, the protrusion 113 of the spike 110 passes through the spike supporting layer 320 and then the cover portion 114 is coupled to the end of the protrusion 13 protruding through the spike supporting layer 320, whereby the spike 110 is firmly coupled to the spike supporting layer 320. The protrusion 113 pierces through the spike supporting layer 320 or passes through a protrusion insertion hole 321 formed on the spike supporting layer 320 and thus the protrusion 113 passes through the spike supporting layer 320. A coupling force of a contact portion between the end of the protrusion 113 and the cover portion 114 can be further strengthened by various methods such as caulking, welding, or bolting as occasion demands. As show in FIG. 5, the spike supporting layer 320 may be formed in a single body. Alternatively, as shown in FIG. 6, in order to easily form the tire structure, that is, in order to easily form the spike supporting layer 320 on the inner circumferential surface of the existing tire 30 in the manufacturing process, the spike supporting layer may be divided into a plurality of spike supporting layers. In addition, a rubber-metal adhesive is applied to the outer circumferential surface of the spike 110, which is usually made of metal, for a solid coupling with the raw rubber material of the attachment layer 310, and then spike is dried. Through the processes of applying the rubber-metal adhesive to the outer circumferential surface of the spike 110, and forming a rubber-metal adhesive layer on the outer circumferential surface of the spike 110, the spike 110 and the (rubber) attachment layer 310 are firmly coupled to each other by a subsequent curing process.

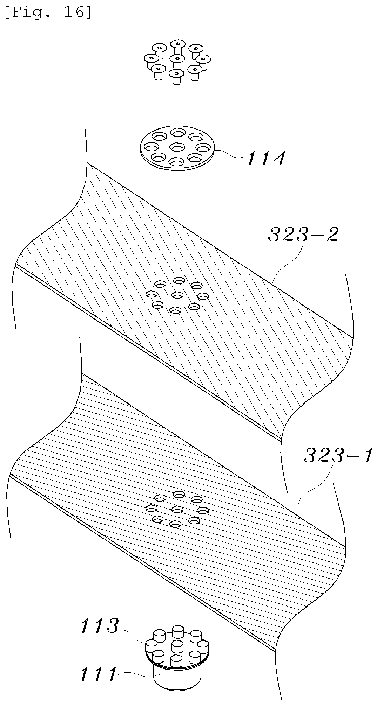

Meanwhile, as shown in FIG. 5, in order to firmly coupling the spike 110 to the spike supporting layer 320, the spike supporting layer 320 uses a steel cord sheet including a steel wire 322 arranged at a regular interval in the sheet, or uses a nylon cord sheet, an aramid cord sheet, a polyamide cord sheet, a hybrid cord sheet, a special cord sheet, etc. (Of course, various other types of cords can be used as long as the spikes and the spike supporting layer are firmly coupled to each other). In other words, the core function of the spike supporting layer 320 is to reliably couple the spike 110 to the spike supporting layer 320 such that the spike 110 is prevented from separation. Accordingly, the spike supporting layer has to not be damaged or broken by an external impact or the like and also has to not be stretched easily to strongly press the spike 110. To this end, as shown in FIG. 5, the steel cord sheet, which is described as an example, has steel wires 322 densely arranged at regular intervals in the sheet, such that the sheet has a rigidity sufficient to be not easily stretched, damaged, and broken. In particular, in the embodiment in which the protrusion insertion hole 321 is formed through the spike supporting layer 320 at a predetermined interval as described above, the steel wires 322 are arranged in the spike supporting layer 320 such that the steel wires are arranged around the periphery of the protrusion insertion hole 321 while surrounding the periphery of the protrusion insertion hole 321 without being broken by the protrusion insertion hole 321, thereby reinforcing a rigidity of the periphery of the protrusion insertion hole 321. Accordingly, it is possible to prevent the periphery of the protrusion insertion hole 321 from damage or breakage due to the external impact or the like. As another example, as shown in FIG. 16, the protrusion insertion hole 321 can be formed through the spike supporting layer 320 in the state in which the steel wires 322 are arranged in the spike supporting layer 320.

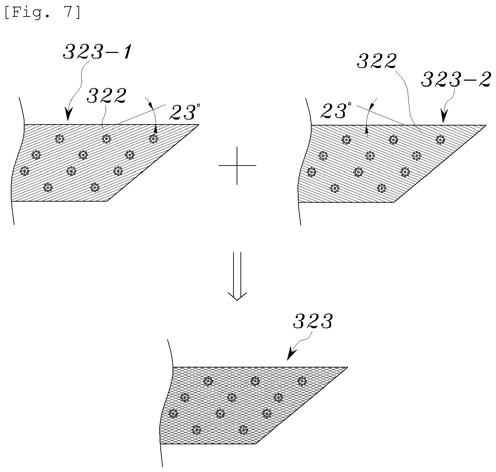

Further, as shown in FIG. 7, the spike supporting layer 320 may be formed of a steel cord sheet layer 323 in which a first steel cord sheet 323-1 formed by arranging the steel wires 322 at regular intervals in a first direction, and a second steel cord 323-2 formed by arranging the steel wires 322 at regular intervals in a second direction are stacked on each other, whereby the steel wires 322 of the first and second sheets are overlapped with each other in a lattice form. In other words, the steel cord sheet layer 323 is formed by overlapping a plurality of sheets so as to increase a rigidity of the spike supporting layer 320 relatively to a single sheet type. In this case, particularly the direction (the direction inclined to the left) in which the steel wires 322 of the first steel cord sheet 323-1 are arranged is different from the direction (the direction inclined to the right) in which the steel wires 322 of the second steel cord sheet 323-2 are arranged. Preferably, the wires of the first and second sheets are arranged in different directions in a lattice form when overlapped with each other. Thus, the steel wires 322 of the steel cord sheet layer 323 in which the first and second sheets are overlapped with each other are overlapped with each other in a lattice form, thereby further enhancing coupling of the spikes 110.

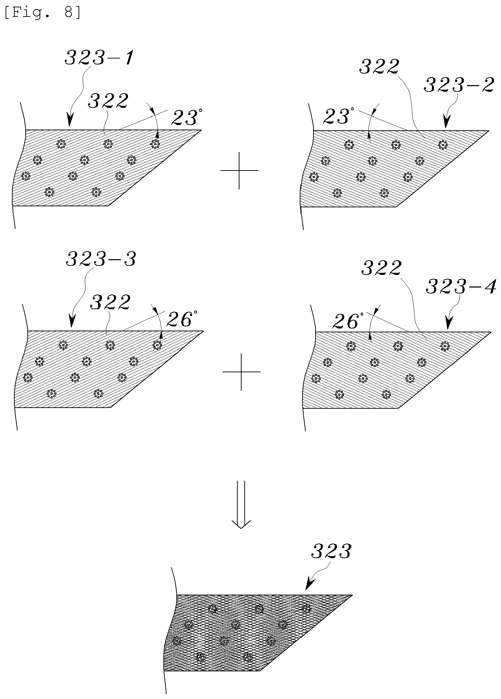

As another example, as shown in FIG. 8, the steel cord sheet layer 323 may be formed of a four-sheet layer further including: a third steel cord sheet 323-3 in which the steel wires 322 are arranged at regular intervals in a direction the same as the direction in which the steel wires 322 of the first steel cord sheet 323-1 are arranged, while arrangement angles thereof are different from each other; and a fourth steel cord sheet 323-4 in which the steel wires 322 are arranged at regular intervals in a direction the same as the direction in which the steel wires 322 of the second steel cord sheet 323-2 are arranged, while arrangement angles thereof are different from each other. In other words, when the steel wires 322 of the first steel cord sheet 323-1 described above are arranged, for example, in the left direction at an inclination angle of about 23°, the steel wires 322 of the third steel cord sheet 323-3 are arranged in the same left direction at an inclination angle of about 26°. In addition, when the steel wires 322 of the second steel cord sheet 323-2 described above are arranged, for example, in the right direction at an inclination angle of about 23°, the steel wires 322 of the fourth steel cord sheet 323-4 are arranged in the same right direction at an inclination angle of about 26°. Accordingly, a lattice form of the steel wires 322 formed when the first steel cord sheet 323-1 and the second steel cord sheet 323-2 are overlapped with each other is different from a lattice form of the steel wires 322 formed when the third steel cord sheet 323-3 and the fourth steel cord sheet 323-4 are overlapped with each other. Thus, the steel cord sheet layer 323 formed by overlapping the four layers of sheets can further enhance coupling of the spikes 110.

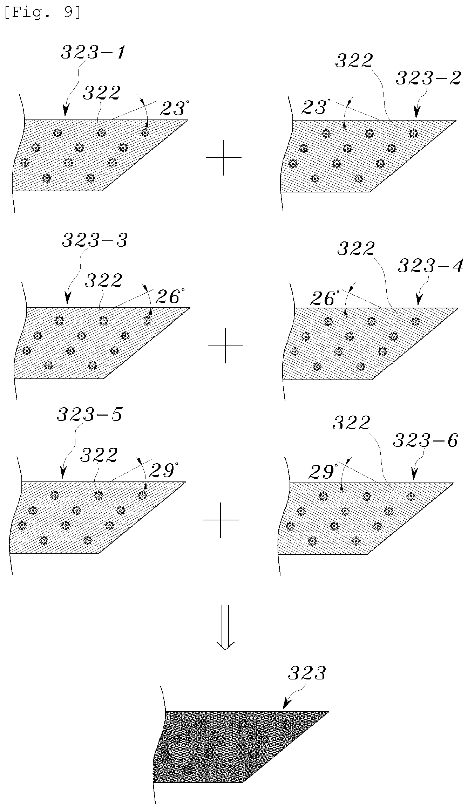

As a further example, as shown in FIG. 9, the steel cord sheet layer 323 may further include a fifth steel cord sheet 323-5 and a sixth steel cord sheet 323-6. Here, the steel wires 322 of the fifth steel cord sheet 323-5 are arranged in the same left direction as the steel wires 322 of the first and third steel cord sheets 323-1 and 323-3 at an inclination angle of about 29°, and the steel wires 322 of the sixth steel cord sheet 323-6 are arranged at an inclination angle of about 29° in the same right direction as the steel wires 322 of the second and fourth steel cord sheets 323-2 and 323-4. Thus, as described above, the steel cord sheet layer 323 formed by overlapping the six layers of sheets can enhance coupling of the spikes 110.

The other used cord sheets may use a nylon cord sheet, an aramid cord sheet, a polyamide cord sheet, a hybrid cord sheet, or a cord sheet having various structures (special cord sheet is also available).

The spike protection layer 330 is configured to protect the spikes 110 inside the tire 30. In other words, as shown in FIG. 3, the spike protection layer 330 is formed to surround the peripheries of the coupling portions 111 of the spikes 110 exposed for connection with the power generation system using the tire deformation, so that the spike protection layer protects the spikes 110 and covers the spike supporting layer 320 supporting the spikes 110. To this end, as shown in FIG. 3, the spike protection layer 330 may include a plurality of layers including a cord layer 332 and one or more special rubber layers 333. As shown in FIG. 3, in order for the spike protection layer 330 to surround the peripheries of the coupling portions 111 of the spikes 110, the spike protection layer 330 may be provided with a spike insertion hole 331 formed on the spike protection layer 330 at a regular interval. The spike insertion hole 331 is formed to have a diameter the same as an outer diameter of the coupling portion 111 of the spike 110, so that the spike protection layer 330 tightly surrounds the peripheries of the coupling portions 111 of the spikes 110, and the spikes 110 can be firmly coupled and protected without being excessively exposed inside (in) the tire 30.

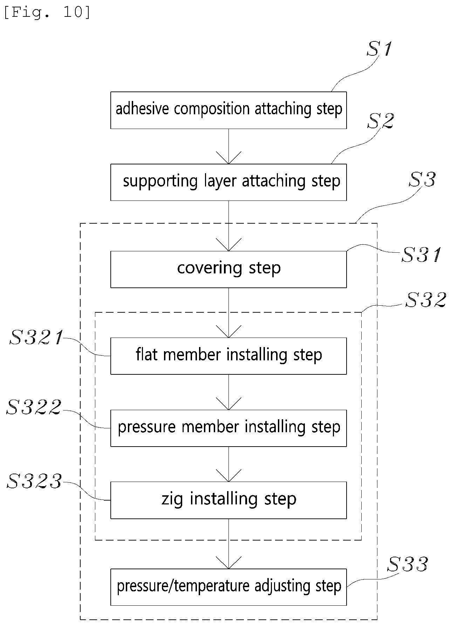

With reference to FIGS. 1 to 15, a method of manufacturing a tire structure having spikes coupled thereon including the above structure will be described. For a power generation system using tire deformation, through the method of manufacturing the tire structure having spikes coupled thereon, the spikes 110 operated in conjunction with deformation of the tire 30 can be coupled to the tire 30 to form the tire structure having spikes coupled thereon. The method includes: an adhesive composition attaching step S1 of attaching an adhesive composition used for forming an attachment layer 310 to an inner surface of a tire 30; and a supporting layer attaching step S2 of attaching a spike supporting layer 320 supporting the spikes 110 operated in conjunction with deformation of the tire 30 to the adhesive composition attached to the inner surface of the tire 30, and may further include: a curing step S3 of performing a chemical reaction such that physical properties of the adhesive composition are changed by pressure and heat applied thereto for a predetermined time.

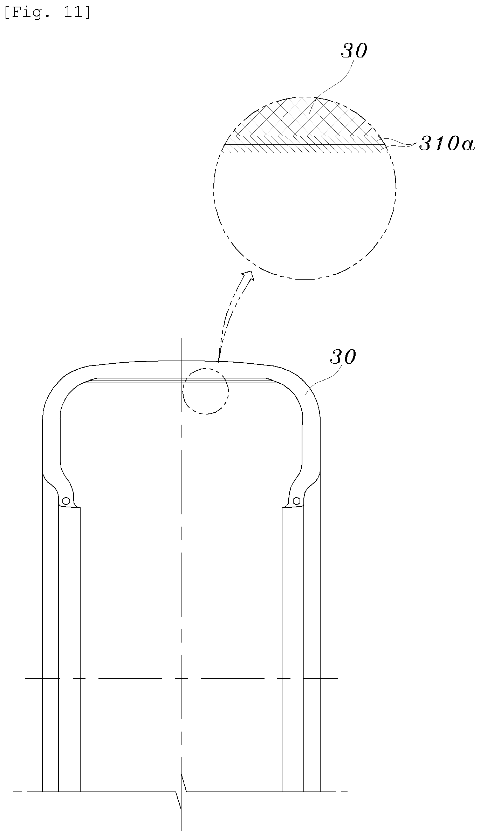

The adhesive composition attaching step S1 is a step of attaching the adhesive composition used for forming the attachment layer 310 to the inner surface of the tire 30, wherein the spike supporting layer 320 supporting the spikes 110 can be coupled to the inside of the tire 30 by the adhesive composition. The adhesive composition attaching step S1 may include a grinding step of grinding and roughening the inner surface of the tire 30 such that the adhesive composition is closely attached to the inner surface of the tire 30 before attaching the adhesive composition. The adhesive composition may use a variety of compositions already used to attach metals, synthetic resins, etc., and particularly when the adhesive composition uses a rubber composition containing raw rubber and sulfur, the adhesive composition is subjected to the curing step S3, which will be described later. In the adhesive composition attaching step S1, for example, as shown in FIG. 11, a rubber composition layer 310a including raw rubber and sulfur may be formed in plural. Here, if necessary, there may be added a step of applying an adhesive rubber such as mucilage, etc., to the ground roughened surface of the inner surface of the tire 30 and drying the adhesive rubber after the grinding step performed prior to attaching the adhesive composition.

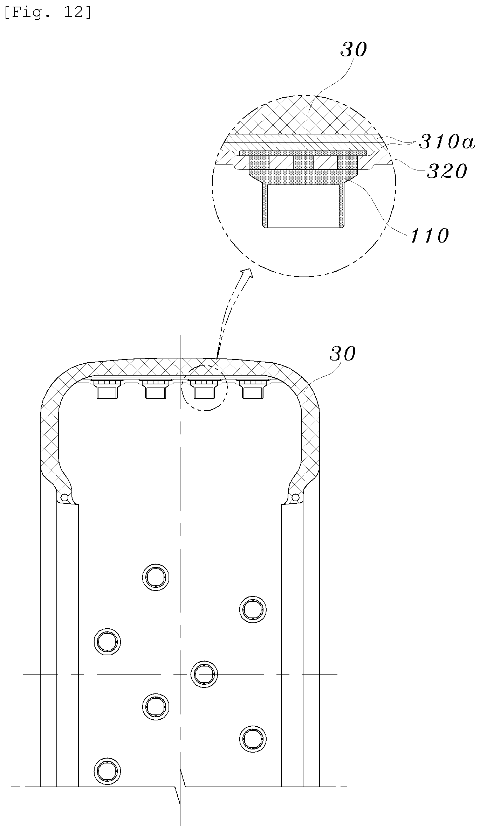

The supporting layer attaching step S2 is a step of attaching the spike supporting layer 320 to the adhesive composition attached to the inner surface of the tire 30, the spike supporting layer 320 supporting the spikes 110 operated in conjunction with deformation of the tire 30. In the supporting layer attaching step S2, as shown in FIG. 5, the spikes 110 can be coupled to the spike supporting layer 320 formed in a single body, and then the spike supporting layer 320 coupled with the spikes 110 can be attached to the adhesive composition. As shown in FIG. 6, the spikes 110 may be coupled to a plurality of spike supporting layers 320a, and then the respective spike supporting layers 320a coupled with the spikes 110 can be attached to the adhesive composition. When using the spike supporting layer 320 formed in a single body in consideration of the inner shape of the tire 30, it may be difficult to attach the spike supporting layer 320 to the adhesive composition. When attaching the respective spike supporting layers 320a, the supporting layer attaching step S2 can be facilitated. FIG. 12 shows an example in which the spike supporting layer 320 supporting the spikes 110 is attached to the adhesive (rubber) composition. The spike supporting layer 320 coupled with the spikes 110 and used in the supporting layer attaching step S2 may be formed such that the protrusion 113 of the spike 110 is embedded in the spike supporting layer 320 and the spike 110 is coupled to the spike supporting layer 320. In other words, in the state in which the spike 110 has the structure including the flange 112 extending from an outer diameter of an end of the spike 110 and having a predetermined area, the protrusion 113 protruding from a lower end of the flange 112 and having a sharp end, and the cover portion 114 coupled to the end of the protrusion 113, the protrusion 113 of the spike 110 passes through the spike supporting layer 320 and then the cover portion 114 is coupled to the end of the protrusion 13 protruding through the spike supporting layer 320, whereby the spike 110 is firmly coupled to the spike supporting layer 320 by coupling the cover portion 114 to the end of the spike supporting layer 320. The coupling force of the contact portion between the end of the protrusion 113 and the cover portion 114 can be further strengthened by various methods such as caulking, welding, or bolting as needed.

Meanwhile, the process of manufacturing the spike supporting layer 320 itself is a process of manufacturing the steel cord sheet by arranging the steel wires 322 at regular intervals as shown in FIG. 5 in order to firmly couple the spikes 110. In other words, the core function of the spike supporting layer 320 is to reliably couple the spikes 110 to the spike supporting layer 320 such that the spikes 110 are prevented from separation. Accordingly, the spike supporting layer has to not be damaged or broken by an external impact or the like and also has to not be stretched easily to strongly press the spikes 110. To this end, as shown in FIG. 5, the steel wires 322 are densely arranged at regular intervals in the sheet, so that the sheet has a rigidity that is not easily stretched, damaged, and broken. Meanwhile, herein, there may be added a process of applying a rubber-metal adhesive to the outer circumferential surface of the spike 110, which is usually made of metal, for a solid coupling with the raw rubber material (adhesive composition) of the attachment layer 310, and then drying the spike. Through the processes of applying the rubber-metal adhesive to the outer circumferential surface of the spike 110, and forming a rubber-metal adhesive layer on the outer circumferential surface of the spike 110, the spike 110 and the (rubber) attachment layer 310 are firmly coupled to each other by a subsequent curing process.

Further, as shown in FIG. 7, as another example of the process of manufacturing the spike supporting layer 320, the spike supporting layer 320 may be formed of a steel cord sheet layer 323 in which a first steel cord sheet 323-1 formed by arranging the steel wires 322 at regular intervals in a first direction, and a second steel cord 323-2 formed by arranging the steel wires 322 at regular intervals in a second direction are overlapped with each other, whereby the steel wires 322 of the first and second sheets are overlapped with each other in a lattice form. In this case, a rigidity of the spike supporting layer 320 can be increased relatively to a single sheet type. Particularly, the direction (the direction inclined to the left) in which the steel wires 322 of the first steel cord sheet 323-1 are arranged is different from the direction (the direction inclined to the right) in which the steel wires 322 of the second steel cord sheet 323-2 is arranged. Preferably, the wires of the first and second sheets are arranged in different directions in a lattice form when overlapped with each other. Thus, the steel wires 322 of the steel cord sheet layer 323 formed by overlapping the first and second sheets are overlapped with each other in a lattice form, thereby further enhancing coupling of the spikes 110.

As a further example of the process of manufacturing the spike supporting layer 320, as shown in FIG. 8, the spike supporting layer may be formed of a four-sheet layer further including: a third steel cord sheet 323-3 in which the steel wires 322 are arranged at regular intervals in a direction the same as the direction in which the steel wires 322 of the first steel cord sheet 323-1 are arranged, while arrangement angles thereof are different from each other; and a fourth steel cord sheet 323-4 in which the steel wires 322 are arranged at regular intervals in a direction the same as the direction in which the steel wires 322 of the second steel cord sheet 323-2 are arranged, while arrangement angles thereof are different from each other. Alternatively, as shown in FIG. 9, the spike supporting layer may be formed of a six-sheet layer further including a fifth steel cord sheet 323-5 (the steel wires 322 of the fifth steel cord sheet 323-5 are arranged in the same direction as the steel wires 322 of the first and third steel cord sheets 323-1 and 323-3, while differing from each other in inclination angle), and a sixth steel cord sheet 323-6 (the steel wires 322 of the sixth steel cord sheet 323-6 are arranged in the same direction as the steel wires 322 of the second and fourth steel cord sheets 323-2 and 323-4, while differing from each other in inclination angle). In this case, as described above, the steel cord sheet layer 323 formed by overlapping a plurality of sheets can enhance coupling of the spikes 110.

The curing step (S3) is a step in which when the rubber composition containing raw rubber and sulfur is used as the adhesive composition, pressure and heat are applied to the rubber composition for a predetermined time sufficient to cause a chemical reaction to change the physical properties of the rubber composition, and includes: a covering step S31, a pressure member fixing step S32, a pressure/temperature adjusting step S33, and the like.

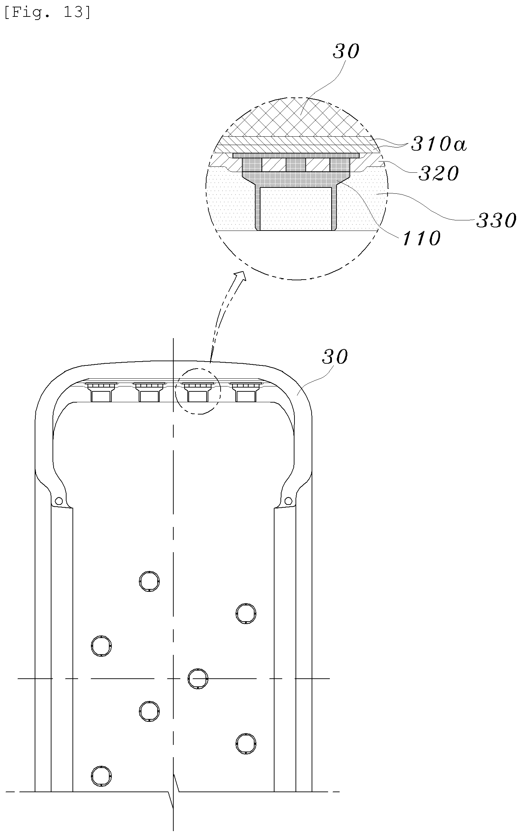

As shown in FIG. 13, the covering step S31 is a step of attaching a cover member 330 surrounding the coupling portions 111 of the spikes and covering the coupling portions 111. In the case of the curing step S3, a pressure member (tube, A) that will be described later expands and pressurizes the rubber composition. When the coupling portions 111 remain exposed, the coupling portions may be broken during expansion of the tube A. Accordingly, the cover member 330 is attached to prevent the coupling portions 111 from being exposed. Since the cover member 330 is made of the same shape and material as the spike protection layer 330 described above, a detailed description thereof will be omitted. However, since the special rubber layer 333 of the cover member 330 is made of cured rubber, physical properties thereof are not changed in the curing step S3. The covering step S31 may further include a step of applying a release agent between the spike supporting layer 320 and the cover member 330 such that the cover member 330 can be easily removed after the curing step S3 is completed. When the cover member 330 is not removed after the curing step S3 is completed, it is possible to form a tire structure including the spike protection layer 330 (this case may be helpful for structurally more rigid coupling of the spike), whereas when the cover member 330 is removed after the curing step S3 is completed, it is possible to form a tire structure having no spike protection layer 330 (since the cover member itself is the spike protection layer and both use the reference number 330).

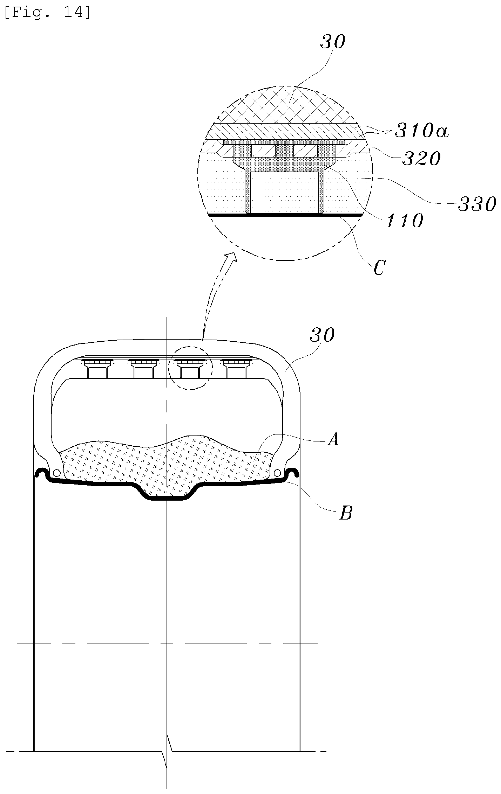

As shown in FIG. 14, the pressure member fixing step S32 is a step of placing the pressure member A applying pressure to the adhesive (rubber) composition at a correct position inside the tire 30, and includes a flat member installing step S321, a pressure member installing step S322, and a jig installing step S323.

The flat member installing step S321 is a step of installing a flat member C covering the coupling portions 111 and the cover member 330. The flat member covers the coupling portions 111 and the cover member 330 to flatten a contact surface of the pressure member A, such that a uniform pressure is applied to the adhesive (rubber) composition. The flat member C may be, for example, made of a material (e.g., Teflon) that does not adhere to the rubber at the time of curing, or a sheet made of urethane (the flat member C may be used or not, and when used, an agent such as a release agent may be applied between the flat member C and the pressure member A such as a tube, which will be described later).

The pressure member installing step S322 is a step of placing the pressure member A applying pressure to the adhesive (rubber) composition at a side of the flat member C. The pressure member A may use, for example, a tube having a ring (donut) shape in which an air inflow hole (not shown) is formed, and is positioned between the flat member C and a support jig B.

The jig installing step S323 is a step of placing the support jig B supporting the pressure member A at a first side of the pressure member A. The support jig B (not shown) has a cylindrical shape in which a side surface thereof protrudes inwardly toward a center, and upper and lower surfaces are open, and is configured with two symmetrical parts. The support jig may be provided on an inner surface thereof with a handle (not shown) capable of easily grasping the support jig B, and a hole (not shown) communicating with the air inflow hole.

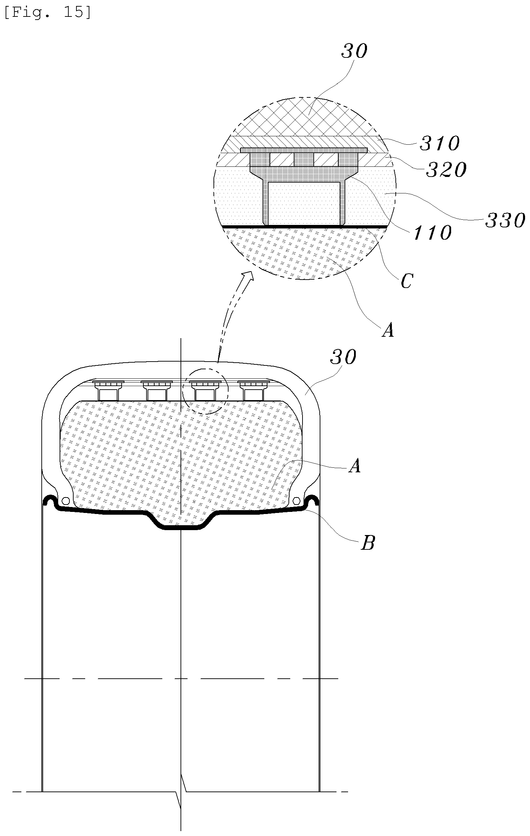

As shown in FIG. 15, the pressure/temperature adjusting step S33 is a step of applying pressure and heat to the adhesive (rubber) composition for a predetermined time (e.g., 2 to 7 hours) such that the adhesive (rubber) composition is cured and the physical properties thereof are changed. For example, the tire 30 after completion of the jig installing step S323 is inserted into a pressure tank (not shown) and is applied with heat, and then the pressure member A is applied with air, whereby the adhesive (rubber) composition is cured. When air flows into the pressure member A positioned between the flat member C and the support jig B and the pressure member expands, the first side of the pressure member A is supported by the support jig B so as not to expand further, while a second side of the pressure member A presses the flat member C, that is, presses the coupling portions 111 and the cover member 330 to press the adhesive composition. When the support jig B, the pressure member A, and the flat member C are removed from the tire 30 after completion of the curing step S3, a tire structure having the spike protection layer 330 is obtained as shown in FIG. 3. When the support jig B, the pressure member A, the flat member C, and cover member 330 are removed, a tire structure having no spike protection layer 330 can be obtained.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A tire structure having spikes coupled thereon, wherein the tire structure is used for a power generation system using tire deformation, and is formed by coupling spikes operated in conjunction with deformation of a tire to an inside of the tire.

2. The tire structure of claim 1, comprising:
a tire;
an attachment layer positioned between an inner surface of the tire and a spike supporting layer, and allowing the spike supporting layer to be coupled to the inside of the tire; and
the spike supporting layer coupled to the inside of the tire by the attachment layer, and supporting the spikes operated in conjunction with deformation of the tire.

3. The tire structure of claim 2, further comprising:
a spike protection layer protecting the spikes inside the tire.

4. The tire structure of claim 2, wherein the attachment layer is formed by placing a rubber composition between the inner surface of the tire and the spike supporting layer and by changing physical properties of the rubber composition through a curing process.

5. The tire structure of claim 2, wherein for firmly coupling the spikes to the spike supporting layer, the spike supporting layer includes any one of the group consisting of a steel cord sheet having steel wires arranged at predetermined intervals, a nylon cord sheet, an aramid cord sheet, a polyamide cord sheet, a hybrid cord sheet, a special cord sheet.

6. The tire structure of claim 2, wherein each of the spikes includes:
a flange extending at an end of the spike and having a predetermined area; and
a protrusion protruding from the flange,
wherein the protrusion of the spike is coupled to the spike supporting layer by passing through the spike supporting layer.

7. The tire structure of claim 3, wherein the spike protection layer is formed to surround coupling portions of the spikes exposed to connect to the power generation system using tire deformation, so the protection layer protects the spikes and covers the spike supporting layer supporting the spikes.

8. The tire structure of claim 5, wherein the spike supporting layer is a steel cord sheet layer formed by overlapping a first steel cord sheet in which the steel wires are arranged at regular intervals in a first direction with a second steel cord sheet in which the steel wires are arranged at regular intervals in a second direction, so that the steel wires of the first and second sheets are overlapped with each other in a lattice form.

9. The tire structure of claim 8, wherein the steel cord sheet layer further includes a third steel cord sheet and a fourth steel cord sheet, wherein
the steel wires of the third steel cord sheet are arranged at regular intervals in a direction the same as the first direction in which the steel wires of the first steel cord sheet are arranged, while arrangement angles thereof are different from each other, and
the steel wires of the fourth steel cord sheet are arranged at regular intervals in a direction the same as the second direction in which the steel wires of the second steel cord sheet are arranged, while arrangement angles thereof are different from each other.

10. The tire structure of claim 9, wherein the steel cord sheet layer further includes a fifth steel cord sheet and a sixth steel cord sheet, wherein
the steel wires of the fifth steel cord sheet are arranged at regular intervals in a direction the same as the first direction in which the steel wires of the first and third steel cord sheets are arranged, while arrangement angles thereof are different from each other, and
the steel wires of the sixth steel cord sheet are arranged at regular intervals in a direction the same as the second direction in which the steel wires of the second and fourth steel cord sheets are arranged, while arrangement angles thereof are different from each other.

11. The tire structure of claim 6, wherein the spike further includes:
a cover portion coupled to an end of the protrusion passing through the spike supporting layer and allowing the spike to be firmly coupled to the spike supporting layer.

12. The tire structure of claim 2, wherein the spikes are coupled to the spike supporting layer such that the spikes are staggered with each other with respect to a bilateral symmetry axis of the tire.

13. The tire structure of claim 2, further comprising:
a rubber-metal adhesive layer positioned between the attachment layer and the spikes, and made of a rubber-metal adhesive.
